# EUROPÄISCHE PATENTANMELDUNG

(11) **EP 0 759 328 A2**
(43) Veröffentlichungstag der Anmeldung: **26.02.1997**
(21) Anmeldenummer: 96112935.0
(22) Anmeldetag: 12.08.1996
(51) Int. Cl.: B05C 5/02

(54) **Vorrichtung zum Auftragen einer Beschichtungslösung**

(30) Priorität: 19.08.1995 DE 19530516
(71) Anmelder: HOECHST AKTIENGESELLSCHAFT, 65926 Frankfurt am Main (DE)
(72) Erfinder: Gartmann, Uwe, Dipl.-Ing., 65347 Eltville (DE); Idstein, Hermann, 65375 Oestrich-Winkeö (DE); Hultzsch, Günter, Dr., 65187 Wiesbaden (DE)

(57) **Zusammenfassung**

Eine Breitschlitzdüse 1 umfaßt eine obere Düsenlippe 2 und eine untere Düsenlippe 3 sowie eine Maske 4, die in einem Düsenspalt 12 angeordnet ist. Die Maske 4 besteht aus einer rechten und linken Spaltbegrenzung 13 bzw. 14 und aus Trennstegen 8A, 8B und 8C. In der unteren Düsenlippe 3 befinden sich Verteilerkammern 10A bis 10D, in die Beschichtungslösung über Zuführungen 9A bis 9D eingeleitet wird. Diese Zuführungen sind in der oberen Düsenlippe 2 angeordnet. Die Verteilerkammern stehen mit Zuführungen 11A bis 11D für Gas oder Luft, angeordnet in der unteren Düsenlippe 3, in Verbindung.

## Beschreibung

Die Erfindung betrifft eine Vorrichtung zum Auftragen einer Beschichtungslösung auf einen laufenden Träger, mit wahlweise einstellbarer Breite der von einer Breitschlitzdüse aufgetragenen Beschichtungslösung auf dem Träger.

Auf dem Gebiet der Antragstechnik für heißschmelzende Kleber sind breitenverstellbare Breitschlitzdüsen bekannt, die mit einer Spindelverstellung für variable Beschichtungsbreiten oder mit segmentierten Düsen für gestufte Breiten arbeiten.

In der DE-A - 19 08 163 ist ein Streichkopf zum Auftragen von Streichmasse auf laufende Bahnen, insbesondere Papierbahnen, bei wahlweise einstellbarer, quer zur Bahn gemessener Streichbreite, beschrieben. Unterhalb der Bahn erstreckt sich quer zur Bahn ein Druckbehälter, der einen Streichmassenanschluß aufweist, an den eine Düse angeschlossen ist, die zwei quer zur Bahn angeordnete Lippen sowie zwei Seitenwände aufweist. Wenigstens eine der beiden Lippen weist an wenigstens einem Ende der Düse Ausschnitte zur Verringerung der Stauhöhe auf. Diese Ausschnitte werden von einem Schieber gesteuert, der eine parallel zur Seitenwand der Düse angeordnete Querwand aufweist, die entsprechend dem Düsenquerschnitt geformt ist und in der Schließstellung des Schiebers bei maximaler Streichbreite, etwa an der Seitenwand der Düse, anliegt. An die Außenfläche der Querwand des Schiebers schließt eine Leitwand zum Abschirmen der Bahn gegen bei eingefahrener Querwand aus der Düse austretende Randströme an. Soll mit maximaler Streichbreite gestrichen werden, so wird der Schieber in seine äußerste Stellung gebracht, in der er die Ausschnitte überdeckt und mit seiner Querwand an der betreffenden Seitenwand der Düse anliegt. Die Streichmasse kann demzufolge an den Unterkanten der Ausschnitte nicht aus der Düse austreten, sondern strömt über die gesamte, quer zur Bahn gemessene Düsenlänge nach oben bis zur Höhe der Bahn. Soll dagegen mit verminderter Streichbreite gestrichen werden, so wird der Schieber eingeschoben, so daß er die Ausschnitte teilweise oder - bei ganz eingeschobenem Schieber - völlig freigibt, und einen der Länge der freigegebenen Ausschnitte entsprechenden Teil des Streichmassenstroms über die Unterkanten des Ausschnitts aus der Düse treten läßt.

Dieses Antragssystem besteht somit aus einer Düse mit einer Verteilerkammer und einem sich verengenden Düsenspalt, der über die gesamte Beschichtungsbreite reicht, und einer Verstellanordnung, die aus zwei Seitenwänden und einer begrenzenden Querwand besteht. Dieses System arbeitet nur in der 6-Uhr-Position, d.h. von unten wird die Beschichtungslösung an eine über eine Walze laufende Bahn angetragen. Die Antragslösung tritt über die gesamte Breite der Düse aus dem sich verengenden Spalt aus und wird nur im Bereich der Verstellanordnung an die Bahn geführt. Im freien Düsenbereich, der nicht von der Verstellanordnung überdeckt ist, tritt die Antragslösung ungehindert nach beiden Seiten aus, ohne die Bahn zu berühren, und wird in einer Wanne aufgefangen.

Bei einer bekannten Düse für den Antrag von lösemittelhaltigem Kaltleim ist die Fließkammer in mehrere, voneinander unabhängige Segmente unterteilt. Der lösemittelhaltige Kaltleim wird über einstellbare, pneumatische Absperrventile individuell den Segmenten der Fließkammer zugeführt. Der Austritt aus den einzelnen Segmenten der Fließkammer ist bis zur Mündung des Fließspaltes getrennt ausgeführt, so daß ein Übertritt der Kaltleimlösung in ein angrenzendes Segment nicht möglich ist.

Kontinuierliche Breitenverstellsysteme von Düsen, die mit einem hydraulisch kontinuierlich verstellbarem Kolben als Breitenbegrenzung arbeiten, bringen Dichtungsprobleme mit sich und sind kontruktiv sehr aufwendig, da der Kolben meist noch über eine Spindel verstellt werden muß. Bei Beschichtung mit viskosen Klebe-Beschichtungsmitteln muß zur Breitenänderung die Schlitzdüse vollständig geöffnet, gereinigt und durch Einsätze auf die neue Beschichtungsbreite eingestellt werden, so daß nur ein nicht kontinuierlicher Betrieb möglich ist.

Insbesondere bei der Herstellung von Fotoresisten, Mikrofilmen, Prüffolien und Druckplatten müssen die Beschichtungsbreiten den wechselnden Formaten angepaßt werden.

Aufgabe der Erfindung ist es, eine Vorrichtung zu schaffen, die eine kontinuierliche, automatische und schnelle Anpassung bzw. Variation der Beschichtungsbreite an wechselnde Formate auf einem Träger ermöglicht.

Diese Aufgabe wird erfindungsgemäß in der Weise gelöst, daß die Breitschlitzdüse in einer ihrer beiden Düsenlippen zumindest eine Zuführung für Gas oder Luft enthält, die mit einer Verteilerkammer für die Beschichtungslösung in der Düsenlippe verbunden ist.

In Ausgestaltung der Erfindung sind mehrere Verteilerkammern in einer der beiden Düsenlippen vorhanden und ist jede Verteilerkammer mit einer Zuführung für Gas oder Luft verbunden. In Abwandlung dieser Ausführungsform der Erfindung sind die beiden äußeren Verteilerkammern mit je einer Zuführung für Gas und Luft ausgerüstet und weisen die inneren Verteilerkammern keine Zuführung für Gas oder Luft auf. Zweckmäßigerweise ist jede Verteilerkammer mit einer Zuführung für die Beschichtungslösung verbunden.

In weiterer Ausgestaltung der Erfindung ist im Düsenspalt der Breitschlitzdüse eine Maske angeordnet, die zwei Spaltbegrenzungen und Trennstege zwischen den Spaltbegrenzungen aufweist, wobei die Trennstege über den Trennwänden zwischen den Verteilerkammern zu liegen kommen.

Die weitere Ausgestaltung der Erfindung ergibt sich aus den Patentansprüchen 6 bis 9.

Mit der Erfindung werden die Vorteile erzielt, daß die Beschichtungslösung, die aus einer der Verteilerkammern in den Beschichtungsabschnitt, das ist der Spaltbereich zwischen der Verteilerkammer und dem Düsenspalt, eintritt, dort in ihrer seitlichen Ausdehnung durch den Druck des über die Zuführung zugeleiteten Gases bzw. der zugeleiteten Luft begrenzt wird. Durch Verändern des Druckes des Gases bzw. der Luft kann die Beschichtungsbreite in bestimmten Bereichen variiert werden. Bedingt durch die fehlenden mechanischen Verschleißteile verläuft der Betrieb weitgehend störungsfrei.

Die Erfindung wird im folgenden anhand von zeichnerisch dargestellen Ausführungsbeispielen näher erläutert. Es zeigen:
- Figur 1: eine perspektivische, teilweise aufgebrochene Ansicht einer ersten Ausführungsform einer Breitschlitzdüse nach der Erfindung,
- Figur 2: eine Seitenansicht einer Antragswalze, eines über die Antragswalze geführten beschichteten Trägers und der ersten Ausführungsform der Breitschlitzdüse im Schnitt,
- Figur 3: die gleiche Seitenansicht wie in Figur 2 und einer zweiten Ausführungsform der Breitschlitzdüse im Schnitt,
- Figur 4: schematisch in Draufsicht die Antragswalze und die untere Düsenlippe der aufgeschnittenen Breitschlitzdüse sowie die Veränderung der Beschichtungsbreite auf dem Träger,
- Figur 5: in Draufsicht eine obere Düsenlippe der Breitschlitzdüse mit Zuführungen für die Beschichtungslösung,
- Figur 6: eine Draufsicht der unteren Düsenlippe mit Verteilerkammern und Zuführungen für Gas oder Luft, und
- Figur 7: eine Draufsicht auf eine im Düsenspalt angeordnete Maske der Breitschlitzdüse.

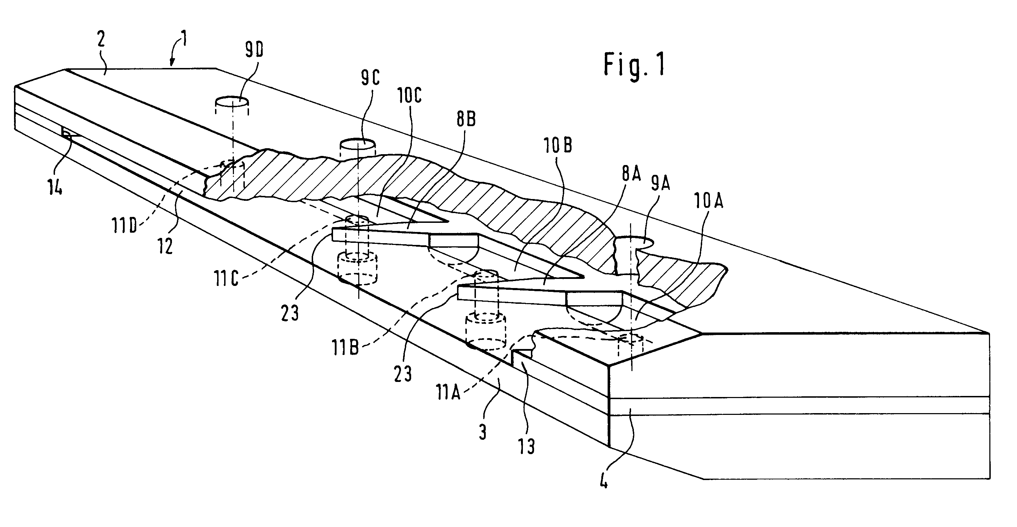

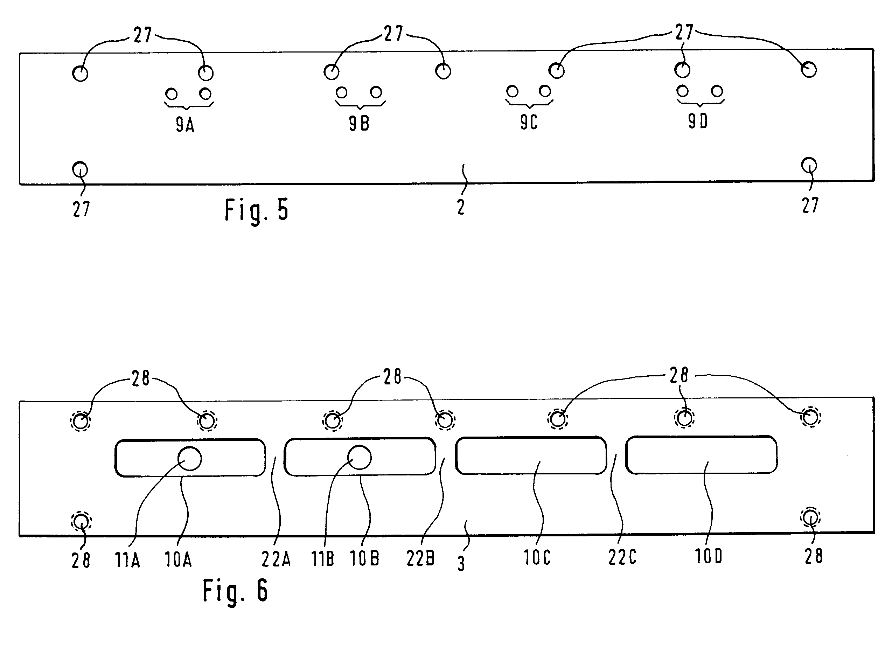

Die perspektivische Ansicht in Figur 1 einer ersten Ausführungsform einer Breitschlitzdüse 1, die teilweise aufgebrochen ist, zeigt die drei wesentlichen Bestandteile der Breitschlitzdüse 1, nämlich eine obere Düsenlippe 2, eine untere Düsenlippe 3 und eine Maske 4. In der unteren Düsenlippe 3 befinden sich Verteilerkammern 10A bis 10D, von denen nur die Verteilerkammern 10A bis 10C in Figur 1 gezeigt sind, während in der oberen Düsenlippe 2 Zuführungen 9A bis 9D für die Beschichtungslösung angeordnet sind, die mit den Verteilerkammern in Verbindung stehen. Die obere und die untere Düsenlippe schließen einen Düsenspalt 12 ein, in dem die Maske 4 angeordnet ist. Die Zuführungen 9A bis 9D bilden Kanäle, die den Verteilerkammern 10A bis 10D gegenüberliegen. Jede der Verteilerkammern 10A bis 10D in der unteren Düsenlippe 3 ist mit einer entsprechenden Zuführung 11A bis 11D für Gas oder Luft verbunden, wobei diese Zuführungen gleichfalls in der unteren Düsenlippe 3 angeordnet sind. Bei Abwandlungen dieser Ausführungsform kann die Breitschlitzdüse 1 in einer ihrer beiden Düsenlippen 2 bzw. 3 nur eine Zuführung 11A für Gas oder Luft enthalten, die mit der Verteilerkammer 10A für die Beschichtungslösung verbunden ist, während die übrigen Verteilerkammern nicht mit einer derartigen Zuführung für Gas oder Luft in Verbindung stehen. Ebenso ist es möglich, daß die beiden äußeren Verteilerkammern 10A und 10D mit je einer Zuführung 11A bzw. 11D für Gas und Luft ausgerüstet sind und daß die inneren Verteilerkammern 11B und 11C keine Zuführungen für Gas oder Luft aufweisen. Selbstverständlich ist die Anzahl der Verteilerkammern nicht auf vier Stück begrenzt, sondern hängt in erster Linie von der Gesamtbreite der Breitschlitzdüse 1 ab, wobei die kleinste Breitenabmessung einer Verteilerkammer nicht weniger als 5 mm betragen soll. In der Praxis haben sich Breiten zwischen 40 und 80 mm der Verteilerkammern bewährt. Die Zuführungen 11A bis 11D für Gas oder Luft werden zweckmäßigerweise gegenüber der Mitte der Verteilerkammern 10A bis 10D angeordnet. Zwischen den Verteilerkammern befinden sich Trennwände 22A bis 22C (vgl. Fig. 6).

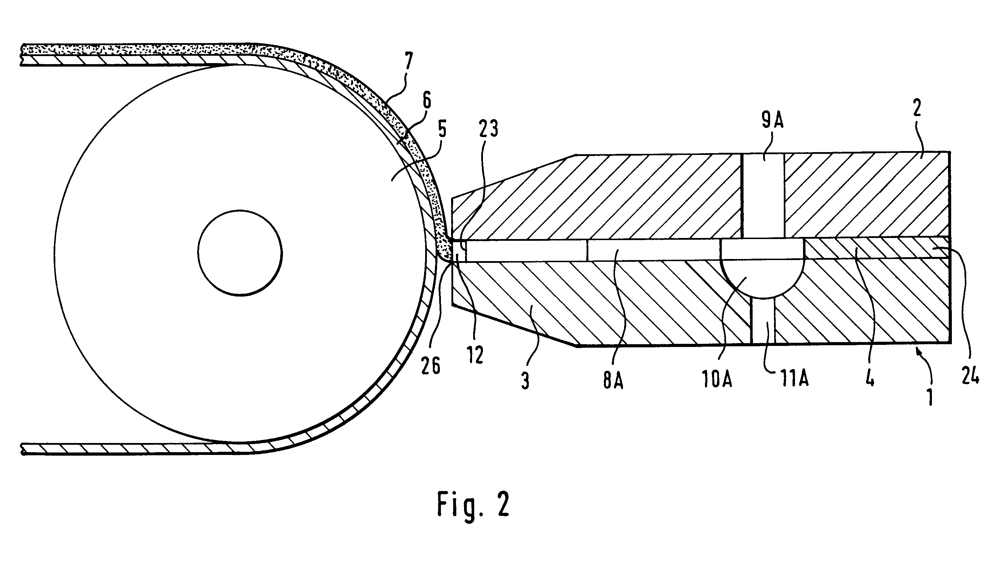

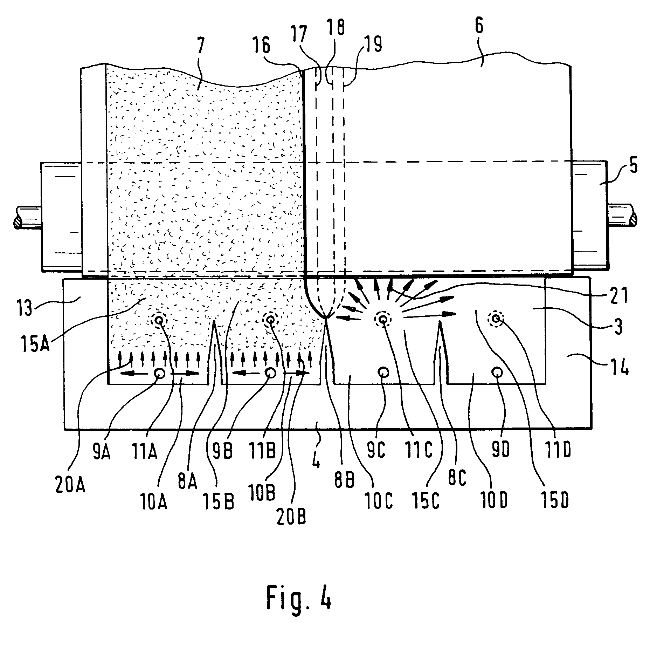

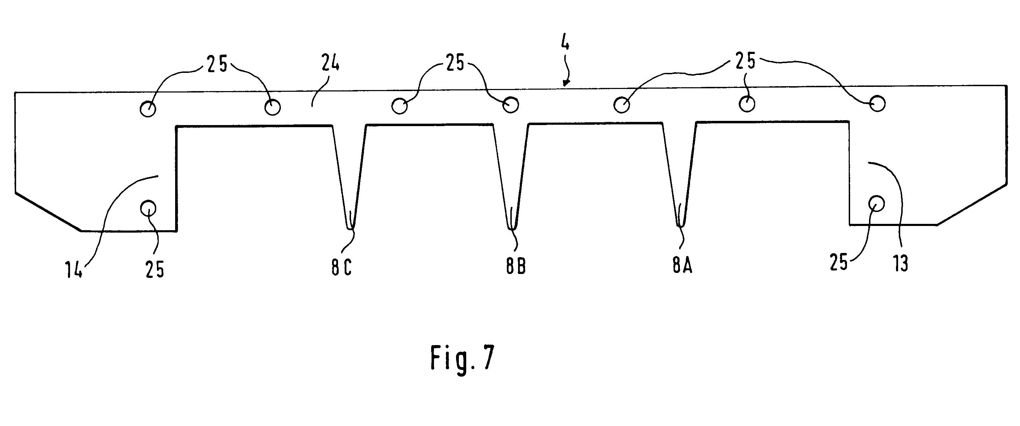

Wie aus den Figuren 1 und 7 ersichtlich ist, besteht die Maske 4 aus einer rechten und linken Spaltbegrenzung 13 bzw. 14 und aus Trennstegen 8A, 8B und 8C. Die Anzahl der Trennstege ist jeweils um eins niedriger als die Anzahl der Verteilerkammern. Innerhalb des Düsenspaltes 12 kommen die Trennstege 8A, 8B, 8C über den Trennwänden 22A, 22B und 22C zwischen den Verteilerkammern zu liegen. Aus Figur 7 ist erkennbar, daß die Trennstege einen spitzwinkligen dreieckförmigen Umriß haben und daß in den Spaltbegrenzungen 13 und 14 sowie in einem Verbindungsteil 24 für die Spaltbegrenzungen Löcher 25 angeordnet sind, durch die nicht direkt gezeigte Schrauben hindurchgeführt sind, die die obere und die untere Düsenlippe miteinander verbinden und die Maske 4 innerhalb des Düsenspalts 12 in ihrer Lage fixieren. In Figur 2 ist in Seitenansicht eine Antragswalze 5 gezeigt, über die ein bandförmiger Träger 6, beispielsweise ein Band aus Aluminium oder aus einer seiner Legierungen, geführt ist. Im geringen Abstand zu der Antragswalze 5 ist im Schnitt die Breitschlitzdüse 1 dargestellt, deren Spaltaustritt 26 einen vorgegebenen Abstand zu der Antragswalze 5 bzw. zu dem Träger 6 aufweist. Aus dem Spaltaustritt 26 tritt die Beschichtungslösung aus und formt auf dem Träger 6 eine Beschichtung 7 festgelegter Breite. Wie aus Figur 2 zu entnehmen ist, sind Spitzen 23 der Trennstege 8A bis 8C gegenüber dem Spaltaustritt 26 der Breitschlitzdüse 1 um eine bestimmte Strecke im Düsenspalt 12 zurückgesetzt, wobei diese Strecke 1 bis 5 mm beträgt. Wie in Figur 4 gezeigt ist, sind die Trennstege 8A, 8B und 8C mit ihren Spitzen jeweils um die gleiche Strecke gegenüber dem Spaltaustritt zurückgesetzt. In Figur 2 befindet sich in der oberen Düsenlippe 2 die Zuführung 9A für die Beschichtungslösung, während die Verteilerkammer 10A und die Zuführung 11A für Gas oder Luft in der unteren Düsenlippe 3 angeordnet sind. Die Breitschlitzdüse 1 in Figur 2 zeigt von links nach rechts innerhalb des Düsenspalts 12 den Spaltaustritt 26, den Trennsteg 8A und das Verbindungsteil 24 der Maske 4, wobei der Trennsteg 8A unschraffiert ist und das Verbindungsteil 24 eine Schraffur aufweist.

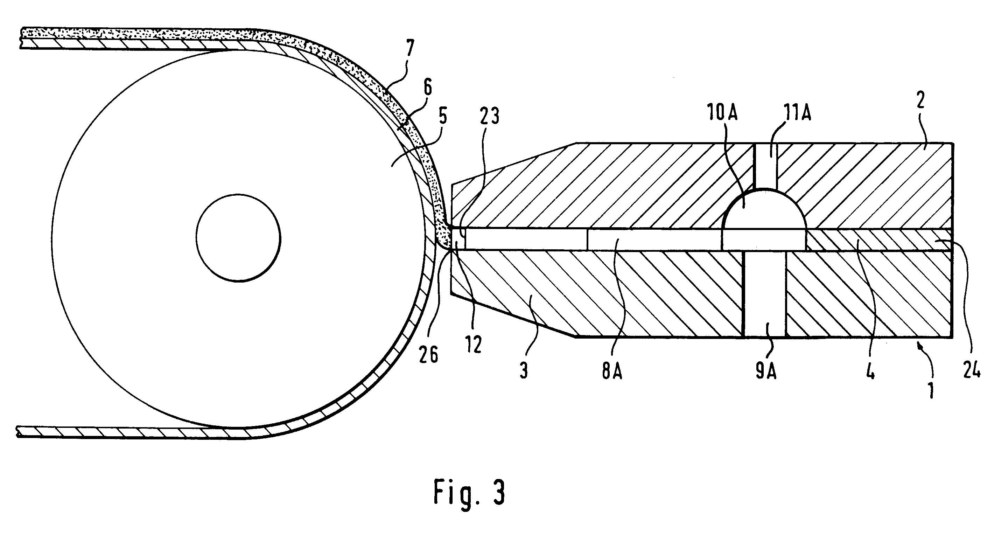

In Figur 3 ist eine weitere Ausführungsform der Breitschlitzdüse 1 im Schnitt dargestellt, wobei die Seitenansicht der Antragswalze 5, des Trägers 6 und der Beschichtung 7 die gleiche wie in Figur 2 ist. Die zweite Ausführungsform der Breitschlitzdüse 1 unterscheidet sich von der in den Figuren 1 und 2 gezeigten ersten Ausführungsform nur dadurch, daß die Verteilerkammern 10A bis 10D in der oberen Düsenlippe 2 angeordnet sind, ebenso wie die Zuführungen 11A bis 11D für Gas oder Luft zu den Verteilerkammern. Dementsprechend befinden sich die Zuführungen 9A bis 9D für die Beschichtungslösung in der unteren Düsenlippe 3. Die übrigen Teile der Figur 3 entsprechen den Teilen gleicher Numerierung in Figur 2 und werden daher nicht nochmal beschrieben.

Die schematische Draufsicht auf die Antragswalze 5 in Figur 4 und den bandförmigen Träger 6, der über die Antragswalze geführt ist, sowie auf die untere Düsenlippe 3 der aufgeschnittenen Breitschlitzdüse zeigt schraffiert die Beschichtung 7 sowie mit durchgezogener Linie einen rechten Rand 16 der Beschichtung 7 und mit dazu parallel verlaufenden, gestrichelten Linien rechte Ränder 17, 18, 19 der Beschichtung 7, entsprechend veränderten Breiten dieser Beschichtung. Durch die Zuführungen 9A bis 9D strömt die Beschichtungslösung in die Verteilerkammern 10A bis 10D ein. In Figur 4 ist beispielsweise gezeigt, daß Beschichtungslösung nur in die Verteilerkammern 10A und 10B einströmt, während der Zufluß von Beschichtungslösung zu den beiden übrigen Verteilerkammern 10C und 10D abgesperrt ist. In den beiden Verteilerkammern 10A und 10B verteilt sich die Beschichtungslösung über die Breite des jeweiligen Beschichtungsabschnittes 15A und 15B, wobei die Breite des Beschichtungsabschnittes 15A sich von der linken Spaltbegrenzung 13 der Maske 4 bis zu dem Trennsteg 8A erstreckt, während die Breite des Beschichtungsabschnittes 15B sich zwischen den beiden Trennstegen 8A und 8B erstreckt. Die Beschichtungslösung wird zunächst durch die Spaltbegrenzung 13 der Maske und die Trennstege 8A und 8B seitlich geführt. Da in den beiden Beschichtungsabschnitten 15A und 15B gleicher hydrostatischer und -dynamischer Druck herrscht, verbinden sich die Beschichtungslösungen an ihren Grenzflächen und strömen gemeinsam in Richtung der Verlängerung des Trennsteges 8B weiter. Am Trennsteg 8B trifft das aus der Zuführung 11C austretende Gas, beispielsweise Luft, teilweise auf den Meniskus der Beschichtungslösung des Beschichtungsabschnittes 15B. Es bildet sich infolge des hydrostatischen Druckes der Beschichtungslösung und des pneumatischen Druckes des Gases an dieser Stelle ein Gleichgewicht aus, so daß bei einem vorgegebenen Druck des Gases sich der rechte Rand 16 der Beschichtung 7 einstellt. Je nach Druckhöhe des zugeführten Gases können sich Breiten der Beschichtung 7 mit den rechten Rändern 17 bis 19 einstellen. Die Ränder 17 und 18 entsprechen Zwischenwerten des Gas- bzw. Verstelldruckes. Dieser liegt im Bereich von 0,2 mbar bis 1 bar. Die Pfeile 20A und 20B deuten die Strömungen der Beschichtungslösungen an, die den Verteilerkammern 10A und 10B über die Zuführungen 9A und 9B zugeleitet werden. Die Pfeile 21 zeigen die Strömungsverteilung des zugeführten Gases bzw. der zugeführten Luft an, die aus der Zuführung 11C in den Düsenspalt der Breitschlitzdüse 1 eintritt. Hierzu ist noch anzumerken, daß die Zuführungen 9A bis 9D für die Beschichtungslösung an und für sich bei der ersten Ausführungsform in der oberen Düsenlippe 2 angeordnet sind, die in Figur 4 nicht zu sehen ist. Zur Erläuterung der Wirkungsweise und der Strömungsverhältnisse der Beschichtungslösung sind die an und für sich nicht zu sehenden Zuführungen 9A bis 9D eingezeichnet.

Die Steuerung der Versorgung der Verteilerkammern mit Beschichtungslösung kann durch Nadelventile erfolgen. Entsprechend der geforderten Breite der Beschichtung 7 auf dem Träger 6 werden zwei, drei oder alle vier Verteilerkammern 10A bis 10D mit Beschichtungslösung beschickt. Wie schon zuvor erwähnt wurde, ist die Anzahl der Verteilerkammern keineswegs auf vier Kammern beschränkt, sondern kann entsprechend den Anforderungen an unterschiedliche Breiten der Beschichtung 7 festgelegt werden. Es können Änderungen der Beschichtungsbreite der Beschichtung 7 von ± 5mm pro Beschichtungsabschnitt erreicht werden, d.h. der Abstand zwischen dem Rand 16 und dem Rand 19 in Figur 4 entspricht dann 5 mm. Durch Veränderung der Länge der Trennstege 8A bis 8C, die Erhöhung der Anzahl der Zuführungen 11A bis 11D für Gas oder Luft sowie durch Querschnittsveränderungen dieser Zuführungen kann eine Vergrößerung des Verstellbereiches der Beschichtung 7 erreicht werden, so daß auch Änderungen der Beschichtungsbreite von mehr als 5 mm pro Beschichtungsabschnitt 15A bis 15D erzielbar sind.

Die Innenflächen des Düsenspaltes 12 sind zweckmäßigerweise mit Materialien, wie Silikon oder Polytetrafluorethylen, beschichtet, die gegenüber der Beschichtungslösung nicht-haftende Eigenschaften besitzen. Diese Beschichtungsmaterialien für die Innenflächen des Düsenspaltes 12 beeinflussen bzw. vergrößern den Verstellbereich für die Beschichtung 7. Von großem Vorteil ist auch, daß die Zuführungen 11A bis 11D für Gas oder Luft als Spülkanäle zum Reinigen der Breitschlitzdüse 1 verwendet werden können. Durch Einleiten einer Reinigungslösung bzw. Spülflüssigkeit in die Zuführungen 11A bis 11D werden die Verteilerkammern 10A bis 10D und der Düsenspalt 12 von Rückständen der Beschichtungslösung gereinigt, ohne daß die Düse geöffnet werden muß.

Die Draufsicht auf eine obere Düsenlippe 2 in Figur 5 zeigt je zwei Zuführungen 9A, 9B, 9C und 9D für jede einzelne Verteilerkammer 10A bis 10D. Je nach Bedarf wird die Beschichtungslösung in die einzelne Verteilerkammer über beide Zuführungen eingeleitet, um einen möglichst gleichmäßigen Dickenfilm der Beschichtungslösung im Düsenspalt 12 zu erhalten. Jedoch kann eine der beiden Zuführungen pro Verteilerkammer auch zum Entlüften während der Beschickung der anderen Zuführung mit Beschichtungslösung verwendet werden. Bei der Entlüftung der Beschichtungslösung treten dann die in der Beschichtungslösung eventuell enthaltenen Gas- bzw. Luftblasen aus der anderen Zuführung aus. In der oberen Düsenlppe 2 sind entlang dem oberen Rand und den beiden Seitenrändern Löcher 27 für die Aufnahme von Schrauben vorhanden, mittels derer die obere mit der unteren Düsenlippe verschraubt wird.

Die Draufsicht auf die untere Düsenlippe 3 in Figur 6 zeigt die vier Verteilerkammern 10A bis 10D und die Trennwände 22A, 22B und 22C zwischen den Verteilerkammern. In den beiden linken Verteilerkammern 10A und 10B sind mittig die Zuführungen 11A und 11B für Gas oder Luft angeordnet. Die beiden übrigen Verteilerkammern 10C und 10D besitzen beispielsweise keine derartigen Zuführungen für Gas oder Luft.

In die entlang des oberen Randes und der Seitenränder der unteren Düsenlippe 3 angeordneten Gewindelöcher 28 werden nicht gezeigte Schrauben eingeschraubt, wenn die obere und die untere Düsenlippe zur Breitschlitzdüse zusammengesetzt und miteinander verbunden werden.

Ebenso ist es möglich, daß die beiden äußeren Verteilerkammern 10A und 10D mit je einer Zuführung 11A bzw. 11D ausgestattet sind, während die beiden inneren Verteilerkammern 10B und 10C keine Zuführungen für Gas bzw. Luft besitzen. Des weiteren sind auch andere Anordnungen von vorteilhafter Bedeutung, bei denen z.B. drei Verteilerkammern Zuführungen enthalten und eine Verteilerkammer keine Zuführung für Gas bzw. Luft enthält, wobei alle denkbaren Kombinationen der Verteilerkammern möglich sind.

## Patentansprüche

1. Vorrichtung zum Auftragen einer Beschichtungslösung auf einen laufenden Träger, mit wahlweise einstellbarer Breite der von einer Breitschlitzdüse aufgetragenen Beschichtungslösung auf dem Träger, dadurch gekennzeichnet, daß die Breitschlitzdüse (1) in einer ihrer beiden Düsenlippen (2, 3) zumindest eine Zuführung (11A) für Gas oder Luft enthält, die mit einer Verteilerkammer (10A) für die Beschichtungslösung in der Düsenlippe (2 bzw. 3) verbunden ist.

2. Vorrichtung nach Anspruch 1, dadurch gekennzeichnet, daß mehrere Verteilerkammern (10A bis 10D) in einer der beiden Düsenlippen (2, 3) vorhanden sind und daß jede Verteilerkammer mit einer Zuführung (11A-11D) für Gas oder Luft verbunden ist.

3. Vorrichtung nach Anspruch 1, dadurch gekennzeichnet, daß die beiden äußeren Verteilerkammern (10A, 10D) mit je einer Zuführung (11A, 11D) für Gas und Luft ausgerüstet sind und daß die inneren Verteilerkammern (11B, 11C) keine Zuführungen für Gas oder Luft aufweisen.

4. Vorrichtung nach den Ansprüchen 1 bis 3, dadurch gekennzeichnet, daß jede Verteilerkammer (10A bis 10D) mit einer Zuführung (9A bis 9D) für die Beschichtungslösung verbunden ist.

5. Vorrichtung nach einem oder mehreren der Ansprüche 1 bis 4, dadurch gekennzeichnet, daß im Düsenspalt (12) der Breitschlitzdüse (1) eine Maske (4) angeordnet ist, die Spaltbegrenzungen (13, 14) und Trennstege (8A, 8B, 8C) zwischen den Spaltbegrenzungen aufweist, wobei die Trennstege (8A, 8B, 8C) über den Trennwänden (22A bis 22C) zwischen den Verteilerkammern (10A bis 10D) zu liegen kommen.

6. Vorrichtung nach Anspruch 5, dadurch gekennzeichnet, daß die Trennstege (8A, 8B, 8C) einen spitzwinkligen dreieckförmigen Umriß haben und daß die Spitzen (23) der Trennstege gegenüber dem Spaltaustritt (26) der Breitschlitzdüse (1) um 1 bis 5 mm im Düsenspalt (12) zurückversetzt sind.

7. Vorrichtung nach Anspruch 1, dadurch gekennzeichnet, daß die Innenflächen des Düsenspaltes (12) mit einem in bezug auf die Beschichtungslösung dehäsiven Material, wie Silikon oder Polytetrafluorethylen, beschichtet sind.

8. Vorrichtung nach Anspruch 2 oder 3, dadurch gekennzeichnet, daß über die Zuführungen (11A bis 11D) für Gas oder Luft zur Reinigung der Verteilerkammern (10A bis 10D) und des Düsenspalts (12) von Rückständen der Beschichtungslösung eine Reinigungslösung einbringbar ist.

9. Vorrichtung nach Anspruch 1, dadurch gekennzeichnet, daß der Gas- oder Luftdruck in den Zuführungen (11A bis 11D) im Bereich von 0,2 mbar bis 1 bar einstellbar ist, um die Antragsbreite der Beschichtungsabschnitte (15A bis 15D) zu verändern.
